# EUROPEAN PATENT APPLICATION

(11) **EP 1 775 868 A2**
(43) Date of publication of application: **18.04.2007**
(21) Application number: 06021424.4
(22) Date of filing: 12.10.2006
(51) Int. Cl.: H04J 14/02

(54) **Transmission protection system and method**

(30) Priority: 13.10.2005 JP 2005298439
(71) Applicant: KABUSHIKI KAISHA TOSHIBA, Tokyo 105-8001 (JP)
(72) Inventor: Suzuki, Masatoshi Int. Prop. Divi., Toshiba Corpo., Tokyo 105-8001 (JP); Ibe, Hiroyuki Intell. Prop. Divi., Toshiba Corpo., Tokyo 105-8001 (JP); Tomioka, Tazuko Int. Prop. Divi., Toshiba Corpo., Tokyo 105-8001 (JP); Dobashi, Kyosuke Int. Prop. Divi., Toshiba Corpo., Tokyo 105-8001 (JP); Takehara, Jun Int. Prop. Divi., Toshiba Corpo., Tokyo 105-8001 (JP); Inamura, Hiroyuki Int. Prop. Divi., Toshiba Corpo., Tokyo 105-8001 (JP)
(74) Representative: HOFFMANN EITLE

(57) **Abstract**

A transmission system which performs protections to node failures by using protection paths according to a shared node protection system for each transmission path on a network formed of a plurality of nodes (A-I), characterized by, uniformly moving the transmission band setting of all other protection paths which share these transmission bands, when the transmission bands on the network are occupied by the protections.

## Description

The present invention relates to a transmission system and its protection method to be applied to a key network, etc. More specifically, the present invention relates to an optical transmission system known as an all optical network, and a protection technique protecting a transmission path in such kind of system from a failure.

A lot of recent information transmission systems connect a plurality of nodes in a mesh state through links to form a mesh network. To allocate the transmission resources of the mesh network to a plurality of communication paths, a conventional method of retrieving an optimum route in accordance with a routing algorithm has been adopted up to now. In recent years, a network transparently transmitting light signal as it is without converting it into an electric signal at a node has attracted attention. Such kind of network is referred to as the all optical network and enables providing a plurality of logical bands onto the links.

In such kind of network, each transmission path is protected from a failure by using protection paths set in association with each transmission path. In a dedicated protection system that is one of protection systems, each protection path is assigned for each transmission path dedicatedly. This dedicated protection system has to assure transmission bands corresponding to all the protection paths in the network in advance, and has a difficulty in usage efficiency of the transmission bands. In opposition to this dedicated protection system, a shared protection has been known. In the shared protection system, each protection path sharing its transmission band, this system is superior to the dedicated protection system in band usage efficiency. This shared protection system is similarly utilized in the case in which a wavelength transmission in optical cut-through system implements protections for faulty nodes, that is, also in the case in which traffic passing through the faulty nodes is integrally protected. In this case, in particular, the shared protection system is referred to as a shared node protection system.

Recovery systems from communication network failures in transmission systems are disclosed in Jpn. Pat. Appln. KOKAI Publication No. 10-65686 and Jpn. Pat. Appln. KOKAI Publication No. 9-307577. Both these documents, however, are not aimed at the all optical network.

In the network adopting the shared node protection system, in an occurrence of a plurality of transmission failures on the network, there is some possibilities of competing transmission bands among a plurality of protection paths used for protections. If this network cannot avoid this competition, since a protection corresponding to a plurality of failures cannot be implemented, some countermeasures are desired.

The present invention is invented due to the aforementioned situations, an object of the invention is to provide a transmission system and its protection method capable of avoiding a competition between bands for protections and capable of coping with occurrences of a plurality of failures.

According to an aspect of the present invention, there is provided a transmission system which performs protections to node failures by using protection paths equipped by a shared node protection system for each transmission path on a network formed of a plurality of nodes, characterized by uniformly moving transmission band setting of all other protection paths which share these transmission bands when the transmission bands on the network are occupied by the protections.

The invention can be more fully understood from the following detailed description when taken in conjunction with the accompanying drawings, in which:
FIG. 1 is an exemplary functional block diagram illustrating an embodiment of a node device regarding the present invention;
FIG. 2 is an exemplary system view illustrating a first embodiment of a transmission system regarding the present invention;
FIG. 3 is an exemplary view illustrating an occurrence example of a resource competition in the case of implementation of a shared node protection in an existing transmission system;
FIG. 4 is an exemplary view illustrating a state in which the present invention is applied to the system shown in FIG. 2;
FIG. 5 is an exemplary view illustrating a state in which the state in FIG. 4 is prevented from a competition between bands;
FIG. 6 is an exemplary sequence view illustrating protection control information transferred among nodes related to a protection in the first embodiment of the present invention;
FIG. 7 is an exemplary system view illustrating a second embodiment of the transmission system regarding the present invention;
FIG. 8 is an exemplary view illustrating a state in which a first failure (1st) occurs from the state in FIG. 7;
FIG. 9 is an exemplary view illustrating a state in which a second failure (2nd) occurs from the state in FIG. 8;
FIG. 10 is an exemplary view illustrating a state in which a third failure (3rd) occurs from the state in FIG. 9;
FIG. 11 is an exemplary sequence view illustrating protection control information transferred among nodes related to a protection in the second embodiment of the present invention;
FIG. 12 is an exemplary system view illustrating a third embodiment of the transmission system regarding the present invention;
FIG. 13 is an exemplary view illustrating a state in which a second failure (2nd) occurs from the state in FIG. 12;
FIG. 14 is an exemplary view illustrating a state in which a third failure (3rd) occurs from the state in FIG. 13;
FIG. 15 is an exemplary sequence view illustrating protection control information transferred among nodes related to a protection in a third embodiment of the present invention;
FIG. 16 is an exemplary system view illustrating a fourth embodiment of the transmission system regarding the present invention;
FIG. 17 is an exemplary view illustrating a state in which the second failure (2nd) and the third failure (3rd) occur from the state in FIG. 16; and
FIG. 18 is an exemplary sequence view illustrating protection control information transferred among nodes related to a protection in a fourth embodiment of the present invention.

### (First Embodiment)

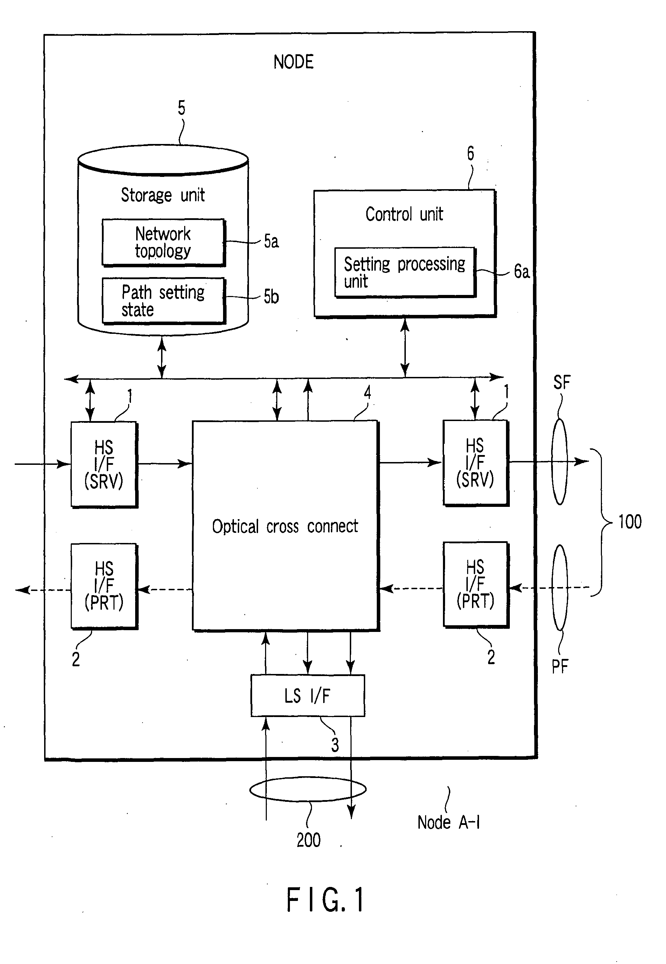

FIG. 1 is a functional block diagram showing an embodiment of a node device regarding the present invention. Nodes B-I are also structured similarly. In FIG. 1, a node A includes a service system high-speed interface unit (HS I/F (SRV)) 1, a protection-system high-speed interface unit (HS I/F (PRT)) 2, a low-speed interface unit (LS I/F) 3, an optical cross connect 4, a storage unit 5, and a control unit 6.

The HS I/F (SRV) 1 separates wavelength multiplexed light introduced via a service fiber SF into individual wavelength light to input it to the cross connect 4, and wavelength-multiplexes each wavelength light supplied from the cross connect 4 to transmit it to the service fiber SF. The HS I/F (PRT) 2 separates wavelength multiplexed light introduced via a protection fiber PF into individual wavelength light to input it to the cross connect 4, and wavelength-multiplexes each wavelength light supplied from the cross connect 4 to transmit it to the protection fiber PF. The LS I/F 3 houses a client interface via a low-speed line 200.

The cross connect 4 arbitrary sets routes of wavelength light supplied from the HS I/F (SRV) 1, the H/S I/F (PRT) 2, and the LS I/F 3 to form a wavelength path in a network. The storage unit 5 stores a variety of items pf program and data, etc., to be required to operate the control unit 6. In particular, the storage unit 5 stores a network topology 5a and a path setting state showing setting states of individual paths formed in the network.

The control unit 6 executes a variety of control functions on the basis of data stored in the storage unit 5. Meanwhile, the control unit 6 has a setting processing unit 6a as a processing function regarding the first embodiment of the invention. The setting processing unit 6a conducts a process to preset an initial value of a transmission band on the network shared by the protection paths. The setting processing unit 6a is realized as a functional object by means of software.

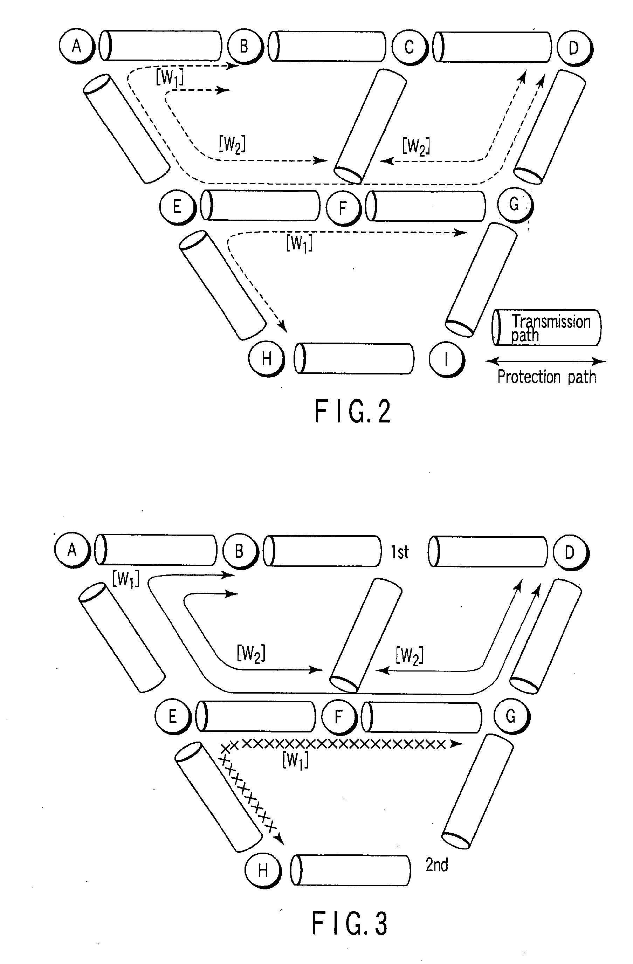

FIG. 2 is a system view showing the first embodiment of the transmission system regarding the present invention. An optical transmission system using a protection mechanism by means of a shared node protection system will be aimed in the following description. The system in FIG. 2 is one in which a plurality of nodes A-I are connected in a mesh manner through optical links and may provide protection paths (shown by both directions arrows in FIG. 2) for transmission paths transmitting traffic.

Circular cylinders in FIG. 2 schematically express transmission paths. In the system, available transmission bands are indicated by W1, W2 and W3. A wavelength indicated in {} in the figure represents a band setting value. A wavelength indicated in [] in the figure represents a shared band value.

In FIG. 2, the protections to the nodes C and I are paid attentions. Each protection is executed by using the protection paths set from a transmission band W1 to a transmission pass W2 among nodes B-A-E-F-G-D, and set in a transmission band M1 among nodes H-E-F-G. In a transmission band W1 among nodes E-F-G, two or more protection paths share the transmission band.

For instance, a route of a protection path to be used in a protection to the node C is decided on the basis of a result of a retrieval for the route through an autonomy decentralized processes among each node under the following procedures (1)-(7).
(1) Each node refers to network topology each grasped by it to select nodes B, F and D connected by each link owned by the node C.
(2) Sets an ingress node to the node B, a passing inhibition node to the node C, and an egress node to the node F, then, retrieves a route B-A-E-F.
(3) Sets an ingress node to the node B, a passing inhibition node to the node C, and an egress node to the node D, then, retrieves a route B-A-E-F-G-D.
(4) Sets an ingress node to the node F, a passing inhibition node to the node C, and an egress node to the node B, then, retrieves a route F-E-A-B.
(5) Sets an ingress node to the node F, a passing inhibition node to the node C, and an egress node to the node D, then, retrieves a route F-G-D.
(6) Sets an ingress node to the node D, a passing inhibition node to the node C, and an egress node to the node B, then, retrieves a route D-G-F-E-A-B.
(7) Sets an ingress node to the node D, a passing inhibition node to the node C, and an egress node to the node F, then, retrieves a route D-G-F.

FIG. 3 is a view showing an occurrence example of a resource conflict in the case of implementation of the shared node protection in the existing system. At first, when the first failure (1st) occurs at the node C, a protection is implemented by using the transmission band W1 and W2 among nodes B-A-E-F-G-D. From this situation, when the second failure (2nd) occurs at the node I, the system uses the transmission band W1 among the nodes H-E-F-G and intends to implement the protection. However, the transmission band W1 among the nodes E-F-G has already been used by the first failure (1st); it causes a competition state to disable the implementation of the protection to the node I.

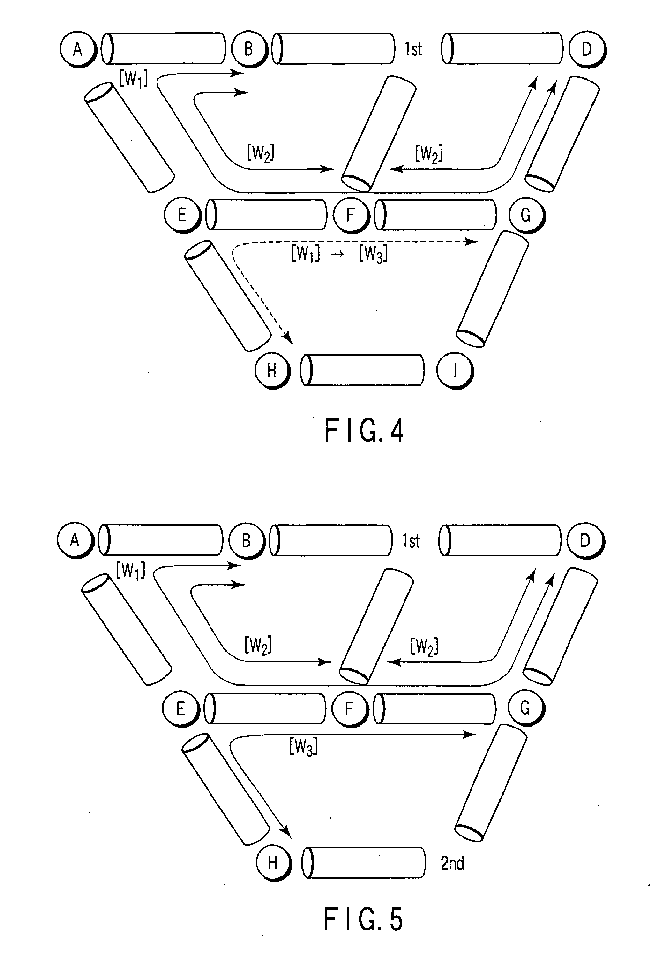

FIG. 4 is a view showing a state in which the present invention is applied to the system shown in FIG. 2. In FIG. 4, the occurrence of the first failure (1st) at the node C causes an execution of a protection by using the transmission bands W1 and W2 among the nodes B-A-E-F-G-D like the manner in FIG. 3. Then, in the first embodiment, the system intends to change the shared band value among the nodes H-E-F-G-I from W1 to W3. From this situation, as shown in FIG. 5, when the second failure (2nd) occurs at the node I, a protection passing among the nodes H-E-F-G is implemented by using the transmission band W3. Accordingly, the occurrence of the competition like one shown in FIG. 3 may be prevented.

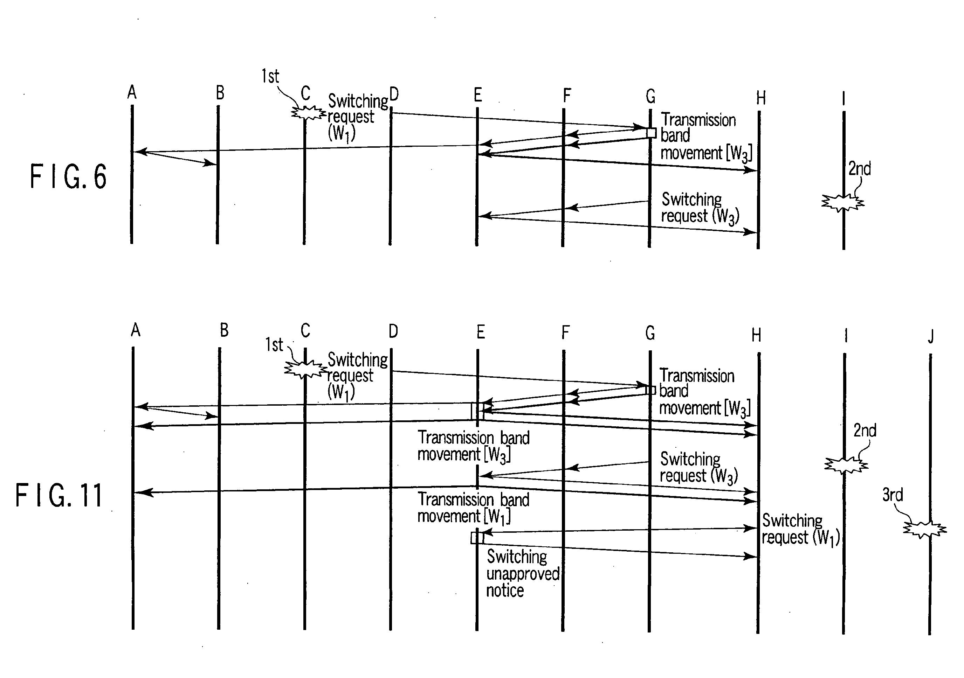

FIG. 6 is a sequence view showing protection control information transferred among each related node in the first embodiment of the invention. In FIG. 6, the detecting of the first failure (1st) by the node D causes signaling of a switch request in order of nodes of D-G-F-E-A-B so as to execute a protection. This signaling is performed for completing a roundabout course of traffic from the node D toward the node B via the node C because the failure in the node C determined by the node D. At this moment, the node G recognizes that the transmission band W1 is shared on the route of the nodes G-F-E.

The node G allows the use from the transmission band W1 to that of W2 so as to implement this protection and performs signaling of a request to cause a "transmission band movement [W3]" for another protection path sharing the transmission band W1, (which is set to W1 among nodes H-E-F-G in FIG. 4), that is, a request to move the setting of the shared transmission band to the transmission band W3. The transmission band to be a moving destination is decided by retrieving in turn from the next to the currently shared (or currently used) transmission band.

Depending on such procedures, as shown in FIG. 5, even if the second failure has occurred at the node I, the setting of the protection passing among the nodes H-E-F-G having been changed so as to use the transmission band W3, the competition like one shown in FIG. 3 does not occur. As given above, according to the first embodiment of the invention, even when a plurality of failures have occurred in the network, the system may implement a protection without causing a conflict between wavelength resources.

### (Second Embodiment)

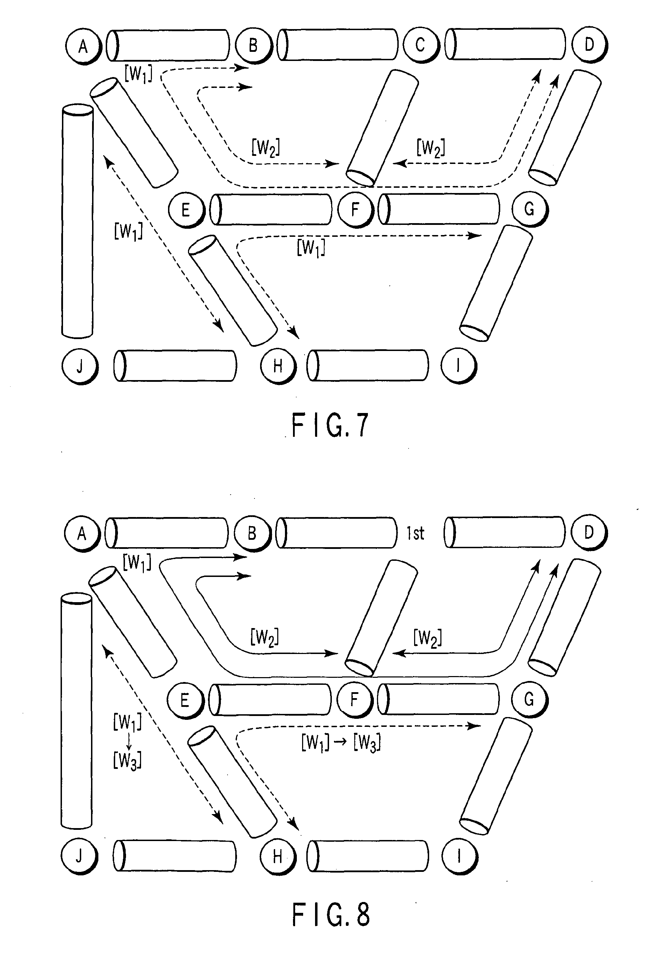

FIG. 7 is a system view showing a second embodiment of the transmission system regarding the present invention. Referring now to FIGS. 7, 8 and 9, operations in a situation in which it is impossible to change in setting of a movement of the transmission band of the protection path described in the first embodiment (a situation in which a transmission band to be a moving destination is not left) will be described hereinafter.

In FIG. 7, protections to the nodes C, I and J are paid attention. Each protection is executed by using protection paths to be set from the transmission band W1 to the protection band W2 among the nodes B-A-E-F-G-D, in the transmission band W1 among the nodes H-E-F-G, and in the transmission band W1 among the nodes A-E-H, respectively. In the transmission bands W1 among the nodes E-F-G, A-E, and E-H, two protection paths out of the foregoing transmission bands W1 have a transmission band in common. In this network, it is presumed that transmission bands available to the protection paths are the transmission paths W1-W3.

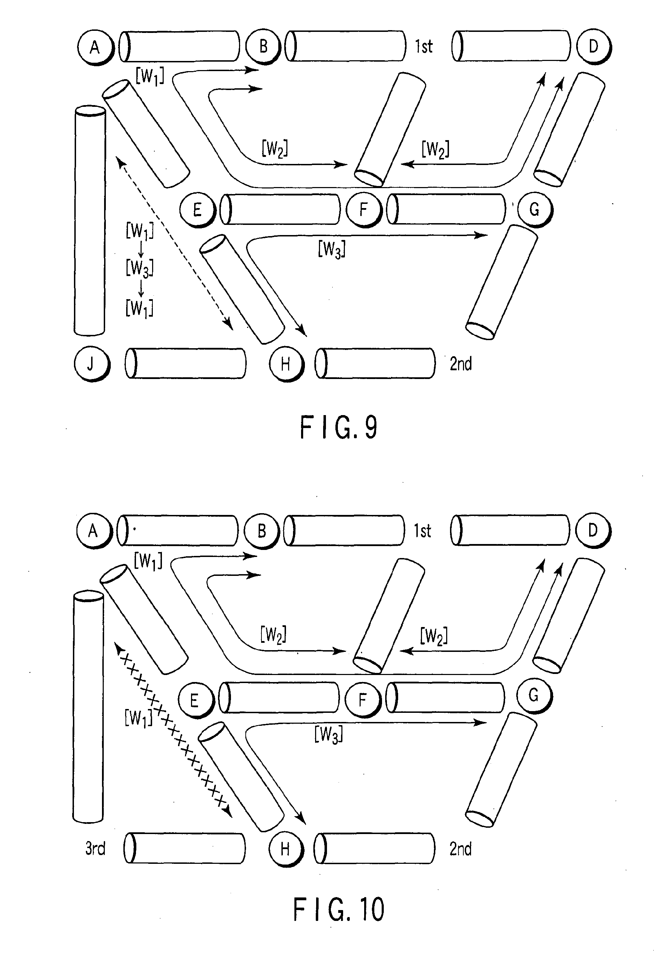

As shown in FIG. 8, having occurred the first failure (1st) at the node C, a protection is conducted by using the transmission band W1 among the nodes B-A-E-F-G-D. In the second embodiment then the transmission system changes both the shared band values W1 among the nodes F-G-D and among the nodes B-A-E-F into the shared band value W2. From this status, when the second failure (2nd) occurs at the node I as shown in FIG. 9, the protection via the nodes H-E-F-G is performed by using the transmission band W3. Thereby, the protection can be executed without any conflict of bands. From this situation, as shown in FIG. 10, furthermore, if the third failure (3rd) occurs at the node J, any of the transmission bands W1, W2 and W3 has already been used on the route of the nodes A-E-H. Therefore, any protection is not implemented in this situation.

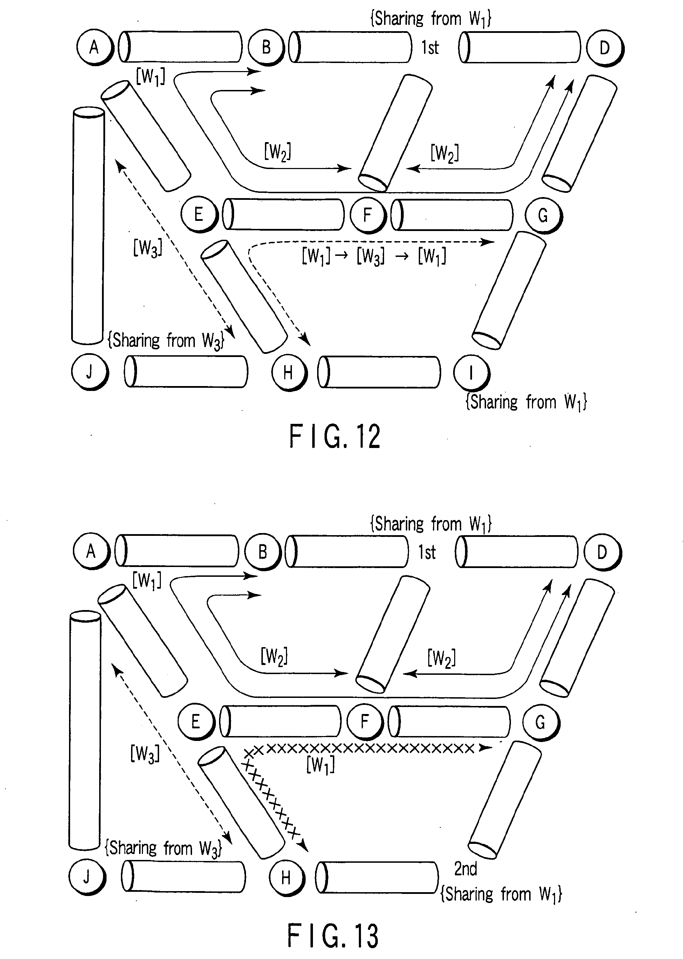

FIG. 11 is a sequence view showing protection control information transferred among nodes related to the protections. In FIG. 11, if the first failure (1st) occurs at the node C, the switch request is made signaling in order of the nodes D, G, F, E, A and B. At this moment, the node G allows using the transmission bands from W1 to W2 to execute the protection to the node C, and makes signaling of "transmission band movement [W3]" information to other protection path sharing the transmission band W1 (in FIG. 8, the protection path is set to W1 among nodes A-E-H).

Form this status, as shown in FIG. 9, when the second failure (2nd) occurs at the node I, in performing the signaling of the switch request in order of nodes G, F, E and H, the node E recognizes that the transmission band W3 is shared on the route of the nodes E-H. The node E allows the user of the transmission band W3 to conduct the protection to the node I, and signals "transmission band movement [W1]" information to other protection path sharing the transmission band W3 (in FIG. 9, the protection path is set to W3 among nodes A-E-H). In this case, the node E intends to retrieve in turn from the next to the transmission band (W3) which is currently shared or used as a transmission band to be a moving destination. However, there is no transmission band after the transmission band W3, so that the node E returns the setting to the initial value (situation before a series of setting movement), namely, to the transmission band W1.

From this state, moreover, it is supposed that the third failure (3rd) occurs as shown in FIG. 10. Then, as shown in FIG. 11, in signaling the switch request in order of the nodes H, E and A, since the node E has already used the transmission band W1 on the route of the nodes E-A, the node E recognizes the conflict. Thus, the node E determines that it is impossible to implement the protection among the nodes A-E to return a "switching unapproved" notice to the node H. As a result, in FIG. 11, the protection to links of nodes A-E-H results in not being implemented.

### (Third Embodiment)

In the second embodiment, the possibility/impossibility of an execution of a protection depends on occurrence order of failures. For instance, the protection to the node J cannot be executed if the failure of the node J is generated in the third, as shown in FIG. 10. In this third embodiment, a method for solving this defect to enable the protection to the failure generated in the third to be implemented will be set forth.

In FIG. 12, the nodes C, I and J are given attributes indicating an initial value of a transmission band shared with the corresponding protection paths to group the shared node protections. In usual, the nodes C, I and J obtain the transmission band W1 to group into only one group; however, the node J gets the transmission band W3 to belong to another one group of the shared node protection.

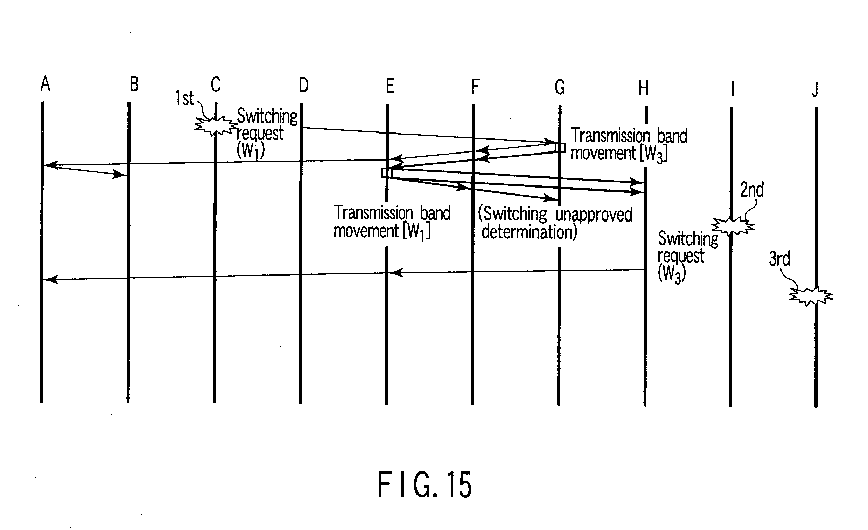

When the node failure at the node C is detected by the node D, the switch request is performed signaling, as shown in FIG. 15, in order of the nodes D, G, F, E, A, and B. At this moment, the node G recognizes that the transmission band W1 is shared on the route of the nodes G-F-E. The node G allows the use of the transmission bands W1 and W2 to execute the protection to the node C and performs signaling of the "transmission band movement [W3]" information to other protection path sharing the transmission band W1 (which is set to transmission band W1 among nodes H-E-F-G in FIG. 12).

When receiving the "transmission band movement [W3]" information which is made signaling, the node E recognizes that the transmission band W3 has already been shared with the protection path among the nodes A-E-H on the route of the nodes E-H. Moreover, the protecting transmission path has an initial value of the transmission band as W3 that is different from the initial value W1 of the protection path that is an object of the "transmission band movement [W3]" information. Therefore, the node E performs signaling of the "transmission band movement [W1]" information to the protection path among the nodes H-E-F-G from which the "transmission band movement [W3]" information has made signaling. In this case, the node E intends to retrieve in turn from the next to the transmission band W3 which is currently shared or used as a transmission band to be a movement destination. However, since the transmission band after one of W3 is not present, the node E returns the wavelength setting to an initial value, namely, W1.

Next, as shown in FIG. 13, when the second failure (2nd) occurs at the node I, the node G, as shown in FIG. 15, intends to signal the switch request in order of, for instance, the nodes G-F-E-H. At that time, the node G recognizes that there is a conflict because the transmission band W1 has already been used on the route of the nodes G-F-R. Therefore, according to the "switching unapproved" determination that it is impossible for the protection to the node I to be implemented, the node G does not perform actual signaling.

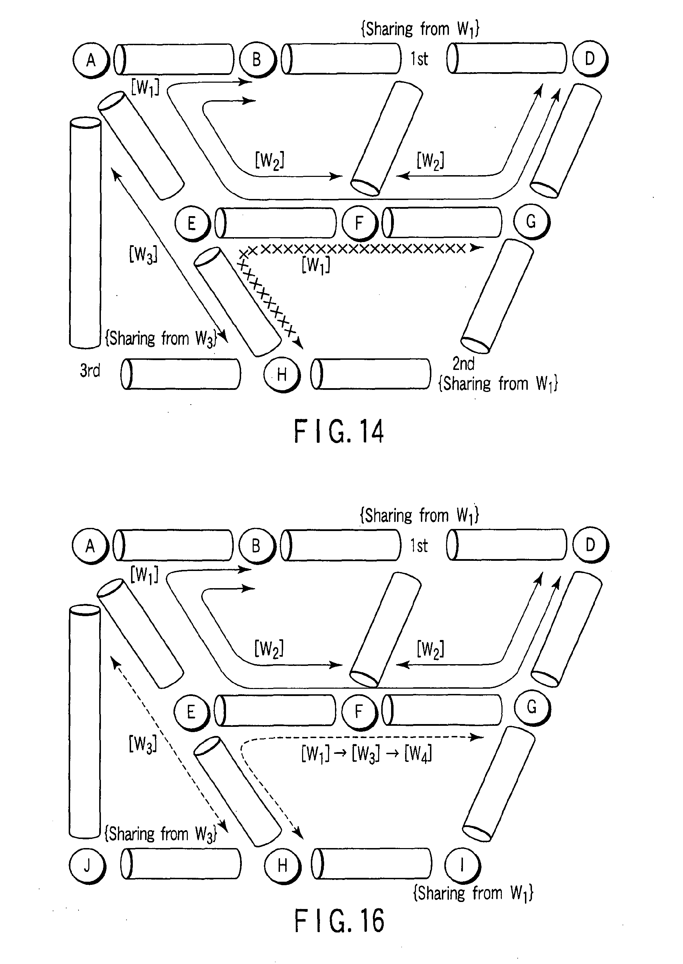

Next to this, as shown in FIG. 14, when the third failure (3rd) is generated at the node J, the switch request is made signaling, as shown in FIG. 15, for instance, in order of the nodes H-E-A. At this moment, it is recognized that there is no transmission band shared with the nodes A, E and H on the route, the protection to the node J is executed as it is.

### (Fourth Embodiment)

In the given embodiments, operations in the case in which three of initial values W1-W3, as the transmission bands available for the protection path, are provided have been mentioned. In a fourth embodiment of the present invention, the case in which available transmission bands are set to W1-W4 will be set forth.

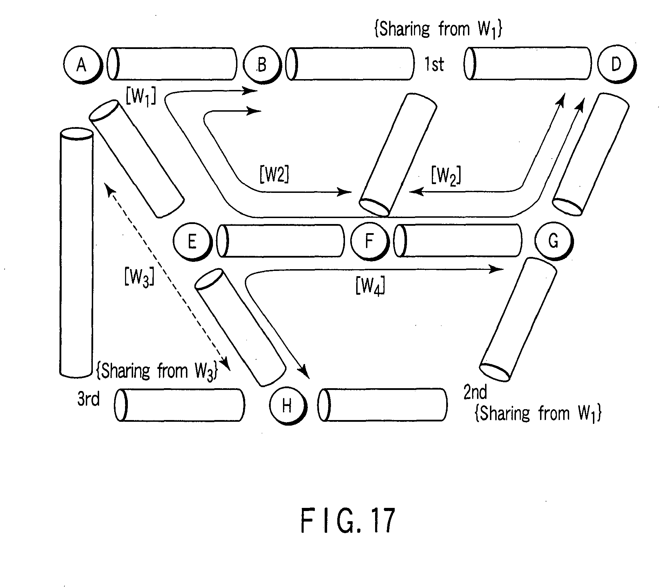

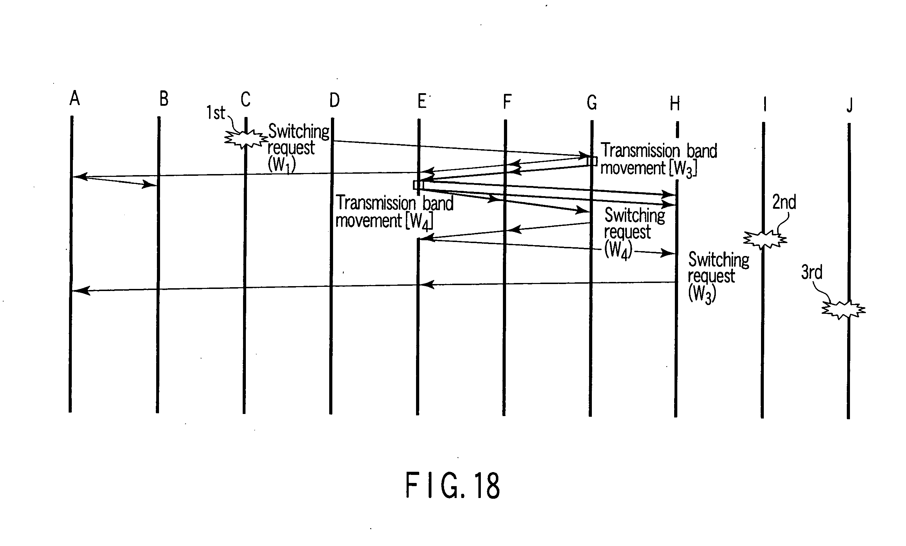

As shown in FIG. 16, when the first failure (1st) occurs at the node C, the node C performs signaling of the switch request, as shown in FIG. 18, in order of, for example, nodes D-G-F-E-A-B. At that moment, the node G recognizes that the transmission band W1 is shared on the route of the nodes G-F-E. The node G allows the use from the transmission band W1 to the transmission band W2 in order to execute the protection to the node C and performs signaling of the "transmission band movement [W3]" information to other protection path sharing the transmission band W1, (which is set to W1 among nodes H-E-F-G in FIG. 16).

When receiving the "transmission band movement [W3]" information which is made signaling, the node E recognizes that the transmission band W3 has already been shared with the protection path among the nodes A-E-H on the route of the nodes E-H. Furthermore, the initial value of the transmission band of this protection path is W3 and differs from the initial value W1 of the protection path that has been an object of the "transmission band movement [W3]" information. Therefore, the node E signals "transmission band movement [W4]" information to the protection path among the nodes H-E-F-G to which the node E has made signaling of the "transmission band movement [W3]" information. In this case, the node E retrieves in order from the next to the transmission band W3 which is currently shared or used as a transmission band to be a moving destination to find out the transmission band W4.

Next, as shown in FIG. 14, if the second failure (2nd) is generated at the node I, the switch request is made signaling, as shown in FIG. 18, in order, for example, the nodes G-F-E-H. At the moment, it is recognized that the transmission band shared on the route at the nodes H, E, F, and G is not present; then, the protections are performed as they are. Further, if the third failure (3rd) occurs at the node J, the switch request, as shown in FIG. 18, is performed signaling in order, for instance, the nodes H-E-A. At that time, it is recognized that the transmission band shared with the nodes A, E and H on the route is not present and protections are implemented as they are.

Like the description given above, according to the present invention, in a transmission system in which protections to node failures are conducted by using the protection paths provided by the share node protection system to each transmission path on a network formed with a plurality nodes; a transmission system characterized in that, when the transmission bands on the network are occupied with the protections, the transmission system uniformly moves the setting of the transmission bands of other all protection paths sharing the transmission bands is provided.

The forgoing transmission system uses a band which is not used by other protection path, as a transmission band to be a moving destination. If the transmission bands to be the moving destinations are not left, the system returns the setting of the shared transmission bands to initial values (situation before a series of setting movement). In this situation, if a new transmission failure occurs and the transmission bands to be used compete with one another, the system does not implement a protection to the new transmission failure to result in "switching unapproved".

In such mechanism, all protection paths on the network belong to one shared protection group, and a situation of protection execution possibility/impossibility in the group depends on occurrence order of failures. As for option, the system creates another shared protection group by means of specific protection paths, and so that the situation of the protection execution possibility/impossibility in another group does not depend on possibility/impossibility in the shared protection group, initial values of the transmission bands shared with the corresponding protection paths are made selectable. By selecting the initial values, the system groups the shared protections. The system expresses the selection by granting attributes indicating initial values of the transmission bands shared with the corresponding protection paths to each transmission path to be protection objects. Further, the system uses bands, as the transmission band to be the moving destination of the protection path, which is not used by other protection paths yet and not shared with other protection paths the initial values of which are not equal to one another. Thereby, the system may perform a protection execution to a specific transmission path independently from protection executions of other transmission paths.

Moreover, according to the present invention, in the shared node protection system in which the foregoing mechanism is applied to the node failure measures, (I) it is necessary to decide the route of the protection path by the time of a stage of band sharing before the failure occurrence, and (II) it is assured that any conflict occurs in the use of bands at the failure occurrence. According to the prescription in (I), the system selects each node connected by N pieces of links of failure-assumed nodes from the network topology, presumes each node as ingress nodes in turn, in contrast, presumes the remaining (N-1) pieces of the nodes as egress nodes, presumes the failure-assumes nodes as passing inhibition nodes, and retrieves an optimum arrival route from the ingress nodes to the egress nodes. With this mechanism equipped, the system may define the protection path route for the node failure corresponding protection through the autonomy decentralized process.

In accordance with the assurance in (II), the system initiates a one-way switch-over execution sequence from the ingress node (failure-determined node) to the egress node (traffic roundabout destination node) in the occurrence of the node failure. This is because the execution time through which the ingress node determines the failure of the object node on the basis of the reception-failure detecting information at the egress node seems to be the minimum time. With the aforementioned mechanism equipped, the system bypasses the traffic in the failure occurrence to reach the protection path, and may shorten the time required to avoid the failure.

According to the present invention, a transmission system and its protection method which may avoid the conflict of the bands for the protections and cope with occurrences of a plurality of failures can be provided.

## Claims

1. A transmission system which performs protections to node failures by using protection paths equipped by a shared node protection system for each transmission path on a network formed of a plurality of nodes, **characterized by** uniformly moving transmission band setting of all other protection paths which share these transmission bands when the transmission bands on the network are occupied by the protections.

2. The transmission system according to claim 1, **characterized by**, wherein a node, which recognizes presences of other protection paths sharing transmission bands, transmits "transmission band movement" information to a node to be a moving object of the transmission band setting when the protection paths use the transmission bands on the network.

3. The transmission system according to claim 1, **characterized by** further comprising a setting unit (6a) which presets initial values of the transmission bands on the network shared with the protection paths.

4. The transmission system according to claim 3, **characterized by**, retrieving a transmission band, as a moving destination of a protection path to be a moving object of the transmission band setting, not used by other protection paths and also not shared with other protection paths having different initial values.

5. The transmission system according to claim 4, **characterized by**, setting a moving destination as an initial value of a transmission band of its protection path if the moving destination of the protection path to be a moving object of the transmission band setting as a retrieval result.

6. The transmission system according to claim 4, **characterized by**, wherein the node, when receiving "transmission band movement" information from other nodes and when moving destination transmission bands instructed by the "transmission band movement" information are not matched with a condition that is "transmission band not used by other protection paths and also not shared with other protection paths having the different initial values", retrieves transmission bands matching with this condition to update the "transmission band movement" information.

7. The transmission system according to claim 1, **characterized by**, wherein a node, which has recognized a presence when the protection path intends to use the transmission bands on the network and when other protection paths using the transmission bands already are present, transmits a "switching unapproved" notice to other nodes therefrom and stops new use of the transmission bands.

8. The transmission system according to claim 1,
**characterized by**, selecting nodes connected by each link of nodes with failures occurred therein on the basis of a network topology; assuming each selected node as ingress nodes in turn; assuming the remaining intermediate nodes as egress nodes; assuming nodes with the occurrence of the failures presumed therein as passing inhibition nodes; retrieving an optimum arrival route from the ingress nodes to the egress nodes; and then deciding routes of the protection paths.

9. The transmission system according to claim 1, **characterized by**, at the time when a failure occurs, completing a traffic roundabout by a one-way control sequence from one end point node to the other end point node of a traffic roundabout which has determined the failure occurrence.

10. A protection method for use in a transmission system which perform protections to node failures by using protection paths equipped by a shared node protection for each transmission path on a network formed of a plurality of nodes, **characterized by**, uniformly moving transmission band setting of all other protection paths which share these transmission bands when the transmission bands on the network are occupied by the protections.

11. The protection method according to claim 10, **characterized by**, wherein, when the protection paths use the transmission bands on the network, a node which recognizes presences of other protection paths sharing the transmission bands transmits "transmission band movement" information to nodes to be setting moving objects in the transmission bands.

12. The protection method according to claim 10, **characterized by** comprising presetting initial values of the transmission bands on the network shared with the protection paths.

13. The protection method according to claim 12, **characterized by**, retrieving transmission bands, as moving destinations of the protection paths to be moving objects of the transmission band setting, not used by other protection paths and also not shared with other protection paths having different initial values.

14. The protection method according to claim 13, **characterized by**, when the result of the retrieval shows that the moving destinations of the protection paths to be the moving objects of the transmission band setting has not been found, setting the moving destinations as the initial values of the transmission bands of the protection paths.

15. The protection method according to claim 13, **characterized by**, wherein the node, when receiving "transmission band movement" information from other nodes and when moving destination transmission bands instructed by the "transmission band movement" information are not matched with a condition that is "transmission band not used by other protection paths and also not shared with other protection paths having the different initial values", retrieves transmission bands matching with this condition to update the "transmission band movement" information.

16. The protection method according to claim 10, **characterized by**, wherein a node, which has recognized a presence when the protection path intends to use the transmission bands on the network and when other protection paths using the transmission bands already are present, transmits an "impossible to switch" notification to other nodes and stops use of the new transmission band.

17. The protection method according to claim 10, **characterized by** further comprising:
selecting nodes connected by each link in which it is presumed that failures have occurred on the basis of a network topology;
assuming each selected node as ingress nodes in turn;
assuming the remaining intermediate nodes as egress nodes;
assuming nodes with the occurrence of the failures presumed therein as passing inhibition nodes;
retrieving an optimum arrival route from the ingress nodes to the egress nodes; and then
deciding routes of the protection paths.

18. The protection method according to claim 10, **characterized by**, at the time when a failure occurs, completing a traffic roundabout by a one-way control sequence from one end point node to the other end point node of the traffic roundabout which has determined the failure occurrence.
